# EUROPEAN PATENT APPLICATION

(11) **EP 4 514 027 A1**
(43) Date of publication of application: **26.02.2025**
(21) Application number: 22938577.8
(22) Date of filing: 22.04.2022
(51) Int. Cl.: H04W 72/1268, H04W 72/566

(54) **TERMINAL, RADIO COMMUNICATION METHOD, AND BASE STATION**

(71) Applicant: NTT DOCOMO, INC., Chiyoda-ku Tokyo 100-6150 (JP)
(72) Inventor: KUMAGAI, Shinya, Tokyo 100-6150 (JP); OKANO, Mayuko, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2022/018623
(87) International publication number: WO 2023/203778

(57) **Abstract**

A terminal according to an aspect of the present disclosure includes a receiving section that receives first downlink control information scheduling a first UL transmission in a resource and second downlink control information indicating cancel of a UL transmission, the resource being supported to be shared between a plurality of Public Land Mobile Networks (PLMNs), and a control section that determines whether to cancel the first UL transmission based on at least one of a priority of the first UL transmission scheduled by the first downlink control information and the second downlink control information.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

In future radio communication systems (for example, Rel. 18 (or later versions)), a study is underway to perform resource sharing aiming at higher efficiency of use of frequency ranges (an existing frequency range and a new high frequency range).

However, in a case where resource sharing is performed between a plurality of business operator, communication control is required in consideration of at least one of priorities between the business operators and a priority each UL transmission, but how to control it has not been sufficiently studied.

In view of this, the present disclosure has one object to provide a terminal, a radio communication method, and a base station capable of appropriately controlling communication even in a case where a resource is shared between business operators. Solution to Problem

A terminal according to an aspect of the present disclosure includes a receiving section that receives first downlink control information scheduling a first UL transmission in a resource and second downlink control information indicating cancel of a UL transmission, the resource being supported to be shared between a plurality of Public Land Mobile Networks (PLMNs), and a control section that determines whether to cancel the first UL transmission based on at least one of a priority of the first UL transmission scheduled by the first downlink control information and the second downlink control information.

### Advantageous Effects of Invention

According to an aspect of the present disclosure, communication can be appropriately controlled even in a case where a resource is shared between business operators.

### Brief Description of Drawings

[FIG. 1] FIGS. 1A to 1D are diagrams to show an example of network sharing.
[FIG. 2] FIG. 2 is a diagram to show an example of a configuration of time/frequency resources corresponding to an MNO.
[FIG. 3] FIGS. 3A and FIG. 3B are diagrams to show an example of UL transmission control (collision handling) based on a priority.
[FIG. 4] FIG. 4 is a diagram to show another example of the UL transmission control (collision handling) based on the priority.
[FIG. 5] FIG. 5 is a diagram to show an example of an overlap between an MNO priority resource and a UL transmission.
[FIG. 6] FIG. 6 is a diagram to show an example of cancellation control on a UL transmission based on a cancellation indication.
[FIG. 7] FIG. 7 is a diagram to show a problem of the cancellation control on the UL transmission based on the cancellation indication in a case where the network sharing is supported.
[FIG. 8] FIG. 8 is a diagram to show an example of UL transmission control according to a first embodiment.
[FIG. 9] FIGS. 9A and 9B are diagrams to show another example of the UL transmission control according to the first embodiment.
[FIG. 10] FIGS. 10A and 10B are diagrams to show another example of the UL transmission control according to the first embodiment.
[FIG. 11] FIG. 11 is a diagram to show an example of UL transmission control according to a second embodiment.
[FIG. 12] FIG. 12 is a diagram to show another example of the UL transmission control according to the second embodiment.
[FIG. 13] FIG. 13 is a diagram to show another example of the UL transmission control according to the second embodiment.
[FIG. 14] FIG. 14 is a diagram to show another example of the UL transmission control according to the second embodiment.
[FIG. 15] FIGS. 15A and 15B are diagrams to show an example of a scenario supporting the present embodiment.
[FIG. 16] FIG. 16 is a diagram to show an example of a schematic structure of a radio communication system according to one embodiment.
[FIG. 17] FIG. 17 is a diagram to show an example of a structure of a base station according to one embodiment.
[FIG. 18] FIG. 18 is a diagram to show an example of a structure of a user terminal according to one embodiment.
[FIG. 19] FIG. 19 is a diagram to show an example of a hardware structure of the base station and the user terminal according to one embodiment.
[FIG. 20] FIG. 20 is a diagram to show an example of a vehicle according to one embodiment.

### Description of Embodiments

### (Resource Sharing)

In future radio communication systems (for example, Rel. 18 (or later versions)), a study is underway to perform resource sharing aiming at higher efficiency of use of frequency ranges (an existing frequency range and a new high frequency range).

The resource sharing makes it possible to share a radio access network (RAN) between a plurality of business operators (operators, an MNOs), divide network (NW, for example, base station) investment costs for each of the business operators, and install many base stations.

For example, sharing of an antenna site (such as land/steel tower) between a plurality of business operators enables sharing of station installation costs between the plurality of business operators.

Sharing of a distributed node (for example, a Distributed Unit (DU))/central node (for example, a Central Unit (CU)) between a plurality of business operators (for example, sharing of a hardware foundation) enables sharing of apparatus costs between the plurality of business operators.

Sharing of a frequency/antenna unit (for example, a Radio Unit (RU)) between a plurality of business operators enables, for example, a resource not used by a certain business operator to be available to another business operator, or the like, improving resource use efficiency.

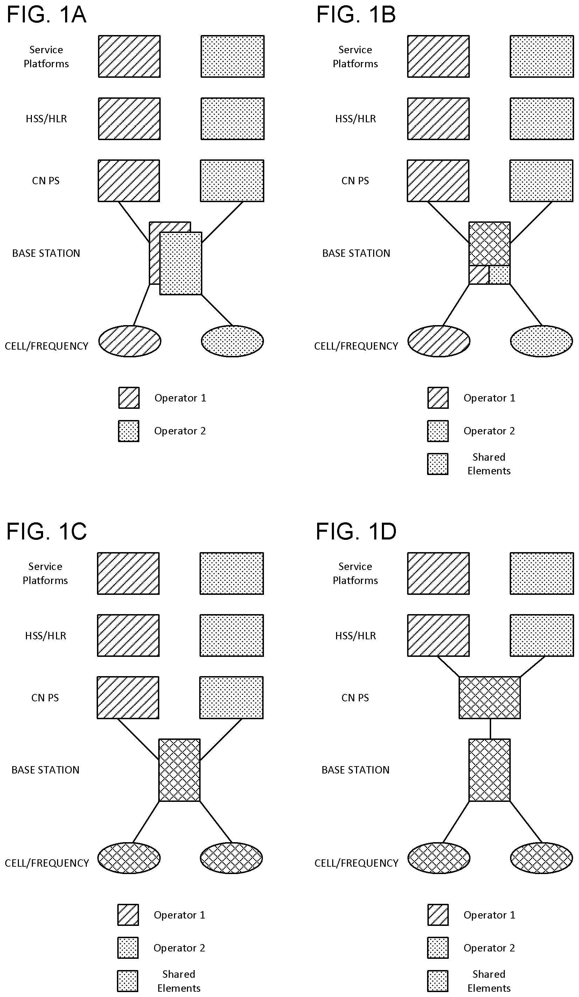

FIGS. 1A to 1D are diagrams to show an example of network sharing.

FIG. 1A shows an example of site sharing. As shown in FIG. 1A, in the site sharing, an antenna site is shared between a plurality of business operators. On the other hand, a service platform, an HSS (Home Subscriber Server)/HLR (Home Location Register), core network (CN) packet switching (PS), a base station, and a cell/frequency are independent for each of the plurality of business operators.

FIG. 1B shows an example of an MORAN (Multi Operator RAN). As shown in FIG. 1B, in the MORAN, a part of a base station (for example, hardware of the base station), in addition to an antenna site, is shared between a plurality of business operators. On the other hand, a service platform, an HSS/HLR, CN PS, another part of a base station (for example, software of the base station), and a cell/frequency are independent for each of the plurality of business operators.

FIG. 1C shows an example of an MOCN (Multi Operator Core Network). As shown in FIG. 1C, in the MOCN, a base station and a cell/frequency are shared between a plurality of business operators. On the other hand, a service platform, an HSS/HLR, and CN PS are independent for each of the plurality of business operators.

FIG. 1D shows an example of a GWCN (Gateway Core Network). As shown in FIG. 1D, in the GWCN, CN PS, a base station, and a cell/frequency are shared between a plurality of business operators. On the other hand, a service platform and an HSS/HLR are independent for each of the plurality of business operators.

In the MOCN/GWCN, since a cell is shared between a plurality of business operators, a configuration can be desirably changed for each of the business operators (for each mobile network operator (MNO), for example, for each ID of a Public Land Mobile Network (PLMN) (PLMN ID)).

For example, in the existing specifications, whether to permit an initial access to the cell, and a tracking area code, and a specific cell ID in the PLMN or the like can be configured for each PLMN ID (for each MNO).

On the other hand, for a terminal (user terminal, User Equipment (UE)) in an RRC connected state, a configuration for each business operator can be configured as an RRC configuration depending on a PLMN ID of the terminal. Specifically, it may be assumed that in the resource sharing, in a case where a part of time resources for a shared cell are desired to be available to only a terminal of a specific business operator, a terminal of another business operator is configured to not use the part of the time resources.

### (MNO Priority Resource)

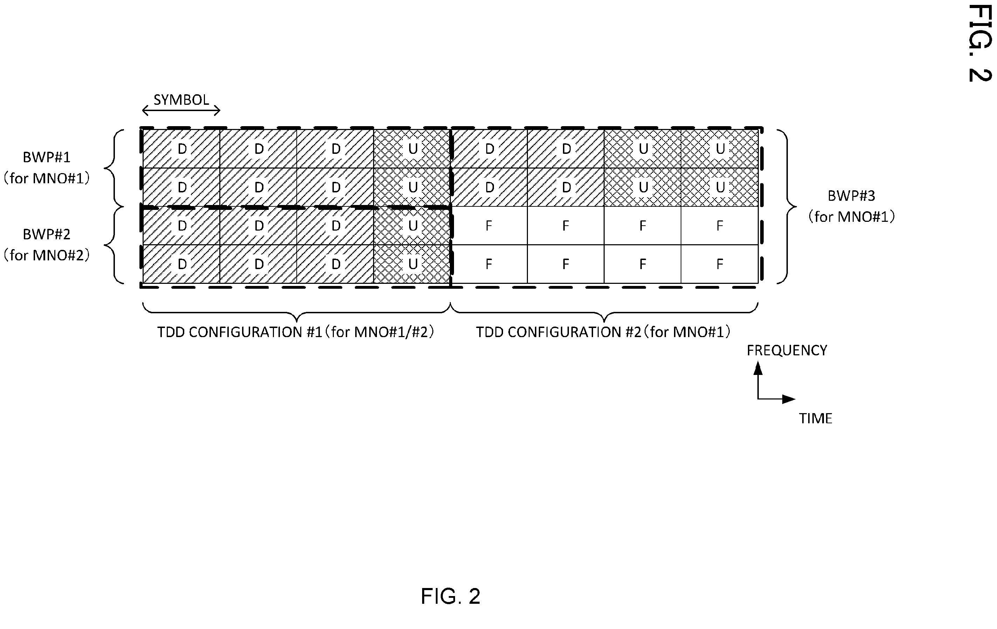

FIG. 2 is a diagram to show an example of a configuration of time/frequency resources in a case of applying the resource sharing. In FIG. 2, the UE is configured with, as a radio resource configuration common in the cell, time resource configurations (TDD configuration #1 and TDD configuration #2) corresponding to a first MNO (MNO #1), frequency resource configurations (BWP configuration #1 and BWP configuration #3) corresponding to the first MNO, a time resource configuration (TDD configuration #1) corresponding to a second MNO (MNO #2), and a frequency resource configuration (BWP configuration #2) corresponding to the second MNO.

In the example shown in FIG. 2, "D," "U," and "F" represent a DL symbol, a UL symbol, and a flexible symbol, respectively. The flexible symbol may be a symbol that a communication direction may be changed, or a symbol available to a UE corresponding to an MNO (MNO #2 in FIG. 2) other than an MNO (MNO #1 in FIG. 2) corresponding to a resource including the flexible symbol.

A part of the DL/UL configuration (time resource)/BWP (frequency resource) may be associated with information identifying the MNO, and the UE of each MNO may transmit/receive the DL/UL signals using the time/frequency resources. In the example shown in FIG. 2, the UE may determine available time/frequency resources based on the information identifying the MNO of the UE itself from the configured radio resource configuration common in the cell.

In the example shown in FIG. 2, the UE corresponding to MNO #1 cannot use the time/frequency resources corresponding to MNO #2 (for example, the frequency resource configured by TDD configuration #1/BWP configuration #2).

In the example shown in FIG. 2, the UE corresponding to MNO #2 cannot use a DL symbol/UL symbol in the time/frequency resources corresponding to MNO #1 (for example, the time/frequency resources configured by TDD configuration #/BWP #1 and TDD configuration #2/BWP configuration #3).

On the other hand, the UE corresponding to MNO #2 can use, in some cases, a flexible symbol in the time/frequency resources corresponding to MNO #1 in a case a certain condition is met. A resource configured with a flexible symbol included in a resource for an MNO may be referred to as an MNO priority resource (a priority resource of MNO #1 in FIG. 2). Note that in the present disclosure, the priority resource is not limited to a resource configured with a flexible. A priority resource may be configured/indicated from the base station to the UE (for example, by a higher layer parameter/MAC CE/DCI).

The certain condition (for example, a condition under which a priority resource for an MNO can be used by another MNO) may be at least one of when a DL/UL scheduling for the priority resource is indicated to a UE of the other MNO, a DL/UL configuration for the priority resource (for example, DCI format 2_0) is reported to a UE of the other MNO, and when a UE of the other MNO does not detect a DL/UL signal of another UE (for example, a UE corresponding to the MNO with the priority resource) (for example, a received power is equal to or less than a threshold).

### <Traffic Types>

In future radio communication systems (for example, NR), traffic types (also referred to as services, service types, communication types, use cases, or the like), such as further enhancement of mobile broadband (for example, enhanced Mobile Broadband (eMBB)), machine type communication that implements multiple simultaneous connection (for example, massive Machine Type Communications (mMTC), Internet of Things (IoT)), and high-reliable and low-latency communication (for example, Ultra-Reliable and Low-Latency Communications (URLLC)), are assumed. For example, in URLLC, lower latency and higher reliability in comparison to eMBB are required.

The traffic type may be identified based on at least one of the following in a physical layer.
- Logical channel having different priority
- Modulation and coding scheme (MCS) table (MCS index table)
- Channel quality indication (CQI) table
- DCI format
- (Radio network temporary indicator (RNTI (System Information-Radio Network Temporary Identifier))) used for scrambling (masking) of cyclic redundancy check (CRC) bits included in (added to) the DCI (DCI format)
- RRC (Radio Resource Control) parameter
- Specific RNTI (for example, an RNTI for URLLC, an MCS-C-RNTI, or the like)
- Search space
- Certain field in DCI (for example, a newly added field or reuse of an existing field)

Specifically, a traffic type of HARQ-ACK for a PDSCH may be determined based on at least one of the following:
- An MCS index table used to determine at least one of a modulation order, target code rate, and transport block size (TBS) of the PDSCH (for example, whether to use an MCS index table 3);
- An RNTI used for CRC-scrambling for the DCI used to schedule the PDSCH (for example, CRC-scrambling with a C-RNTI or an MCS-C-RNTI) .

A traffic type of an SR may be determined based on a higher layer parameter uses as an identifier of an SR (SR-ID). The higher layer parameter may indicate whether the traffic type of the SR is the eMBB or the URLLC.

A traffic type of CSI may be determined based on configuration information related to a CSI report (CSIreportSetting), a DCI type or DCI transmission parameter used for triggering, or the like. The configuration information, the DCI type, or the like may indicate whether the traffic type of the CSI is the eMBB or the URLLC. The configuration information may be a higher layer parameter.

A traffic type of a PUSCH may be determined based on at least one of the following:
- An MCS index table used to determine at least one of a modulation order, target code rate, and transport block size (TBS) of the PUSCH (for example, whether to use an MCS index table 3);
- An RNTI used for CRC-scrambling for the DCI used to schedule the PUSCH (for example, CRC-scrambling with a C-RNTI or an MCS-C-RNTI) .

The traffic type may be associated with communication requirements (requirements for latency, error rate, or the like, required conditions), data kind (speech, data, or the like), or the like.

A difference between a URLLC requirement and an eMBB requirement may be a URLLC latency being smaller than an eMBB latency, or the URLLC requirement including a reliability requirement.

For example, an eMBB user (U) plane latency requirement may include a downlink U plane latency being 4 ms, and an uplink U plane latency being 4 ms. On the other hand, a URLLC U plane latency requirement may include the downlink U plane latency being 0.5 ms, and the uplink U plane latency being 0.5 ms. A URLLC reliability requirement may include a 32-byte error rate being 10⁻⁵ in a U plane latency of 1 ms.

Advancement in reliability of a traffic for unicast data is under study as enhanced Ultra Reliable and Low Latency Communications (eURLLC). Hereinafter, the URLLC and the eURLLC are simply referred to as the URLLC unless otherwise distinguished.

### <Configuration of Priority>

In Rel-16 or later versions NR, a study is underway to configure priorities of a plurality of levels (for example, two levels) for certain signals or channels. The priority may be a priority of UL transmission in a UE (for example, Intra-UE UL prioritization).

For example, a communication is assumed to be controlled (for example, transmission control upon collision, or the like) with a different priority being configured for each of signals or channels corresponding respectively to different traffic types (also referred to as services, service types, communication types, use cases, or the like). This allows a communication to be controlled with a priority different depending on a service type or the like being configured for the same signal or channel.

A priority may be configured for at least one of a signal (for example, UCI such as a HARQ-ACK, a reference signal, or the like), a channel (PDSCH, PUSCH, PUCCH, or the like), a reference signal (for example, channel state information (CSI), a sounding reference (SRS) or the like), a scheduling request (SR), and a HARQ-ACK codebook. A priority may be configured for each of a PUCCH used to transmit an SR, a PUCCH used to transmit a HARQ-ACK, a PUCCH used to transmit CSI.

The priorities may be defined including a first priority (for example, high) and a second priority (for example, low) having a lower priority than the first priority. Hereinafter, the first priority may be expressed as HP and the second priority may be expressed as LP. Alternatively, three or more kinds of priorities may be configured.

The UE may determine a priority of each UL transmission based on at least one of a certain field of the DCI (for example, PriorityIndicator field) and a higher layer parameter for a priority. Any one of the following may be applied as an indication of the priority of each UL transmission (for example, each channel/signal).

### <<SR>>

A priority may be configured for an SR transmitted on a PUCCH by way of a higher layer parameter (for example, schedulingRequestPriority).

### <<HARQ-ACK>>

A priority may be configured for a HARQ-ACK transmitted on a PUCCH by way of DCI/higher layer parameter. For example, a priority may be indicated to an HARQ-ACK corresponding to a dynamic PDSCH (for example, a PDSCH dynamically scheduled by way of the DCI) by way of a certain field of the DCI (for example, Priority Indicator). A priority may be configured for a HARQ-ACK corresponding to a semi-persistent PDSCH (SPS PDSCH) by a way of a higher layer parameter (for example, HARQ-ACK-Codebook-indicator-forSPS).

### <<CSI>>

A priority may be configured/defined fixedly (for example, low) for periodic/semi-persistent CSI (P/SP-CSI) transmitted on a PUCCH. A priority may be indicated to aperiodic/semi-persistent CSI (A/SP-CSI) transmitted on a PUSCH by way of a certain field of the DCI (for example, Priority Indicator).

### <<PUSCH>>

A priority may be configured for a PUSCH by way of DCI/higher layer parameter. For example, a priority may be indicated to a dynamic grant PUSCH (for example, scheduled by way of the DCI PUSCH) by way of a certain field of the DCI (for example, Priority Indicator). A priority may be configured for a configuration grant PUSCH (for example, a PUSCH configured through the RRC) by way of a higher layer parameter (for example, priority).

### <<SRS>>

A priority may be configured/defined fixedly (for example, low) for a periodic/semi-persistent SRS (P/SP-SRS) and an aperiodic SRS (A-SRS) triggered by DCI format 2_3.

### (Contention Handling for UL Transmission)

The UE may control a UL transmission based on a priority in a case where a plurality of UL signals/UL channels (for example, UL signals/UL channels scheduled/triggered) overlap. Overlapping may be interpreted as overlying or collision.

A plurality of UL signals/UL channels overlapping may include a case where time resources (or time resources and frequency resources) of a plurality of UL signals/UL channels overlap, or a case where transmission timings of a plurality of UL signals/UL channels overlap. A time resource may be interpreted as a time domain. A time resource may be a symbol, a slot, a sub-slot, or subframe units.

A plurality of UL signals/UL channels overlapping in the same UE (for example, intra-UE) may referred to the plurality of UL signals/UL channels overlapping in at least the same time resource (for example, symbol). UL signals/UL channels contending in different UEs (for example, inter-UE) may refer to a plurality of UL signals/UL channels overlapping in the same time resource (for example, symbol) and frequency resource (for example, RB).

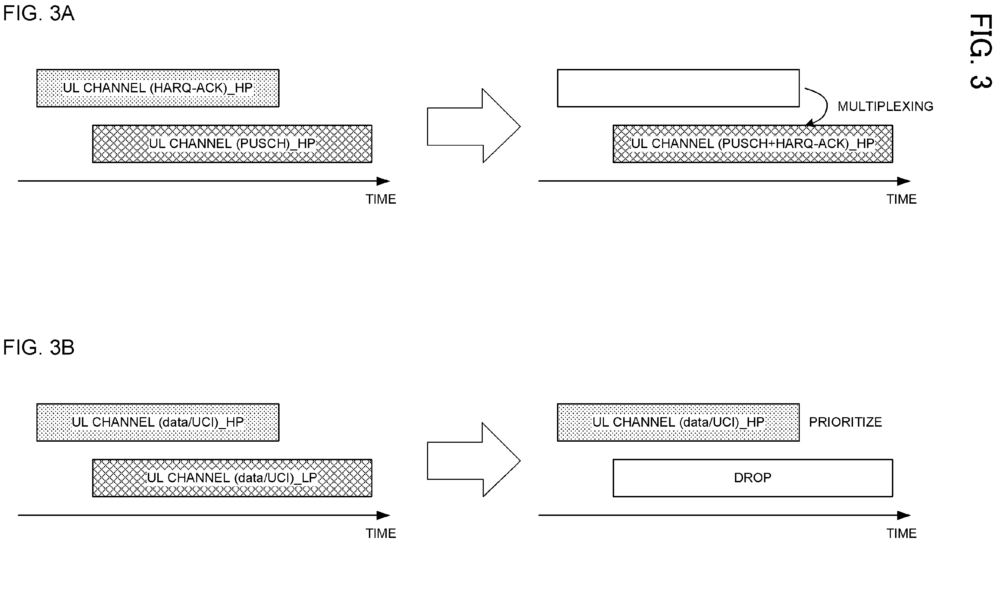

For example, in a case where a plurality of UL signals/UL channels having the same priority overlap, the UE performs control to transmit the plurality of UL signals/UL channels multiplexed/mapped to one UL channel (see FIG. 3A).

FIG. 3A shows a case where a HARQ-ACK (or a PUCCH for HARQ-ACK transmission) configured with the first priority (HP) overlaps UL data/UL-SCH (or a PUSCH for UL data/UL-SCH transmission) configured with the first priority (HP). In this case, the UE multiplexes (maps) the HARQ-ACK onto the PUSCH to transmit both the UL data and the HARQ-ACK.

In a case where a plurality of UL signals/UL channels having different priorities overlap, the UE may perform control to perform a UL transmission having a higher priority (for example, prioritize a UL transmission having higher priority), and not perform (for example, drop) a UL transmission having a lower priority (see FIG. 3B).

FIG. 3B shows a case where UL data/HARQ-ACK (or UL data/UL channel for HARQ-ACK transmission) configured with the first priority (HP) overlaps UL data/HARQ-ACK (or UL data/UL channel for HARQ-ACK transmission) configured with the second priority (LP). In this case, the UE performs control to drop the UL data/HARQ-ACK having a lower priority and prioritize the UL data/HARQ-ACK having a higher priority. Note that the UE may change (for example, defer or shift) a transmission timing of the UL transmission having a lower priority.

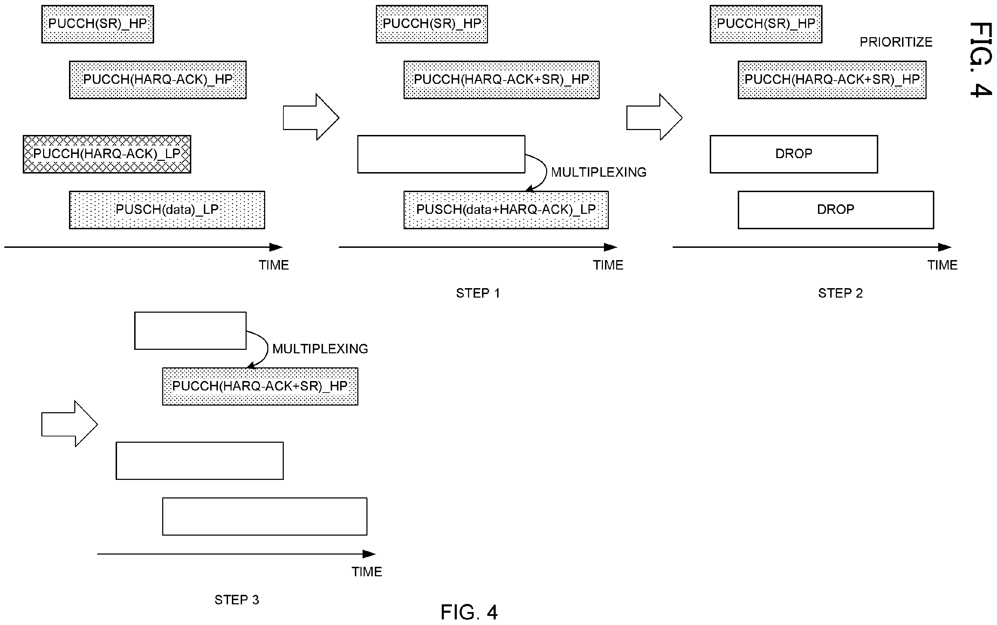

In a case where more than two (or three or more) UL signals/UL channels overlap in the time domain, transmission may be controlled by up to four steps (see FIG. 4).

In step 1, one UL channel for multiplexing UL signals each transmitted in a UL transmission having a lower priority is selected (collision resolution between UL transmissions having a lower priority). In FIG. 4, a HARQ-ACK (or a PUCCH for HARQ-ACK transmission) and data (or a PUSCH for data/UL-SCH transmission) having the second priority (LP) may be multiplexed onto a certain UL channel (here, a PUSCH).

In step 2, control may be performed to prioritize a UL transmission having a higher priority and drop a UL transmission having a lower priority among UL transmissions having different priorities (collision resolution between UL transmissions having different priorities). In FIG. 4, a PUCCH for SR transmission and a PUCCH for HARQ-ACK transmission having the first priority (HP) may be prioritized, and a PUSCH for HARQ-ACK and data transmission having the second priority (LP) may be dropped.

In step 3, one UL channel for multiplexing UL signals each transmitted in a UL transmission having a higher priority is selected (collision resolution between UL transmissions having a higher priority). In FIG. 4, an SR (or a PUCCH for SR transmission) and a HARQ-ACK (or a PUCCH for HARQ-ACK transmission) having the first priority (HP) may be multiplexed onto a certain UL channel (here, a PUCCH for HARQ-ACK transmission).

After performing step 3, in a case where the UL transmissions having different priorities contend (when the relevant case remains), control is performed, as step 4, to prioritize a UL transmission having a higher priority and drop a UL transmission having a lower priority among the UL transmissions having different priorities.

In this way, the UE resolves a collision between a plurality of UL transmissions each having a lower priority in step 1, resolves a collision between a plurality of UL transmissions having different priorities (if any) in step 2, resolves a collision between a plurality of UL transmissions each having a higher priority in step 3, and resolves a collision between a plurality of UL transmissions having different priorities (if any) in step 4.

Note that FIG. 4 shows multiplex processing being performed between the UL transmissions each having a higher priority in step 3 without limitation. For example, in step 1, among a plurality of UL transmission overlapping, multiplex processing between UL transmissions each having a lower priority and multiplex processing between UL transmissions each having a higher priority may be performed.

### (Contention Handling UL Transmission in consideration of MNO Priority Resource)

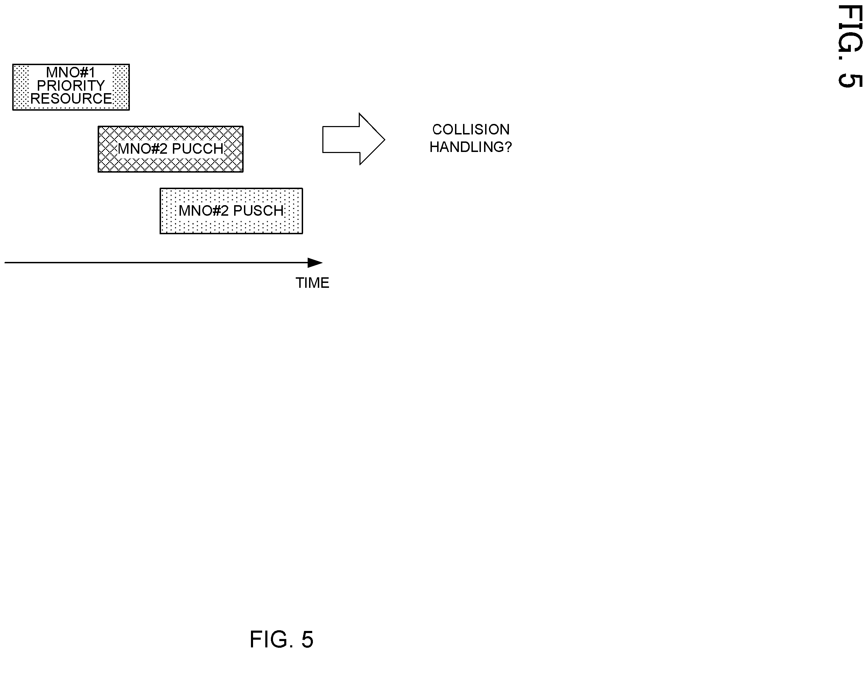

In future radio communication systems, as shown in FIG. 2, it is assumed that a configuration of a resource corresponding to an MNO (for example, MNO priority resource) is supported. In such a situation, a case may be conceivable where a priority resource for an MNO (for example, a flexible resource for MNO #1 in FIG. 2) and a resource used for UL transmission of another MNO (for example, MNO #2) may overlap. Furthermore, a case may be conceivable where a plurality of resources used for UL transmissions of the other MNO may overlap (see FIG. 5).

FIG. 5 shows a case where a resource for MNO #1 (MNO #1 priority resource) and a part of UL transmission #1 of MNO #2 (for example, a PUCCH resource) overlap, and relevant UL transmission #1 of MNO #2 and another UL transmission #2 of MNO #2 (for example, a PUSCH resource) overlap. Note that in the present disclosure, a UL transmission may be interpreted as a resource used for a UL transmission.

In a case where in a priority resource for an MNO, a UL transmission of another MNO is performed (for example, an MNO priority resource and a UL transmission resource of another MNO contend), a transmission of the MNO corresponding to the priority resource may be prioritized and the transmission of the other MNO may be dropped/canceled (collision handling based on inter-MNO priorities).

In such a case, a problem is how to control a collision handling procedure in the UE UL transmission. For example, a problem is how to control the UL transmission (for example, a processing order of multiplex/drop or the like) based on the MNO priority resource (or inter-MNO prioritization processing)/priority of UL transmission resource (or inter-UL transmission prioritization processing) or the like.

Thus, the inventors of the present invention focused on the case where when resource sharing (or MNO priority resource) is introduced/supported, another MNO priority resource and one or more UL transmissions overlap and studied the UL transmission control (for example, collision handling) in such a case, and came up with the idea of an aspect of the present embodiment.

### (Priority of Inter-UE UL Transmission)

In Rel. 15/16, group-common DCI (for example, DCI format 2_4) indicating cancel of a scheduled UL transmission is supported.

DCI format 2_4 is used to report a PRB or symbol that the corresponding UL transmission is canceled. For example, the UE may determine the PRB and symbol that the UL transmission is canceled based on information included in DCI format 2_4 (for example, a cancellation indication).

The indication by way of DCI format 2_4 may be applied to a PUSCH transmission/SRS transmission. In a case where the PUSCH transmission/SRS transmission is scheduled by the DCI format, the indication by way of DCI format 2_4 is applied to the PUSCH transmission or SRS transmission only in a case where the last symbol of a PDCCH reception corresponding to the DCI format is earlier than the first symbol of the PDCCH reception corresponding to DCI format 2_4.

The UE may apply/interpret the information reported by way of DCI format 2_4 to control the PUSCH transmission/SRS transmission based on the last timing of a PDCCH reception in which DCI format 2_4 is detected/the last symbol of a control resource set in which DCI format 2_4 is detected.

The UE does not expect to cancel the PUSCH transmission or SRS transmission before certain symbols after the last symbol of the control resource set in which DCI format 2_4 is detected.

The UE, in a case of receiving DCI indicating cancel of a UL transmission (for example, DCI format 2_4), may determine whether to cancel the UL transmission based on the priority of the UL transmission. For example, in a case where a priority of a UL transmission scheduled in a resource indicated by way of the DCI (for example, UL CI) is low, the UE cancel the UL transmission. On the other hand, for example, in a case where a priority of a UL transmission scheduled in a resource indicated by way of the DCI is high, the UE perform the UL transmission.

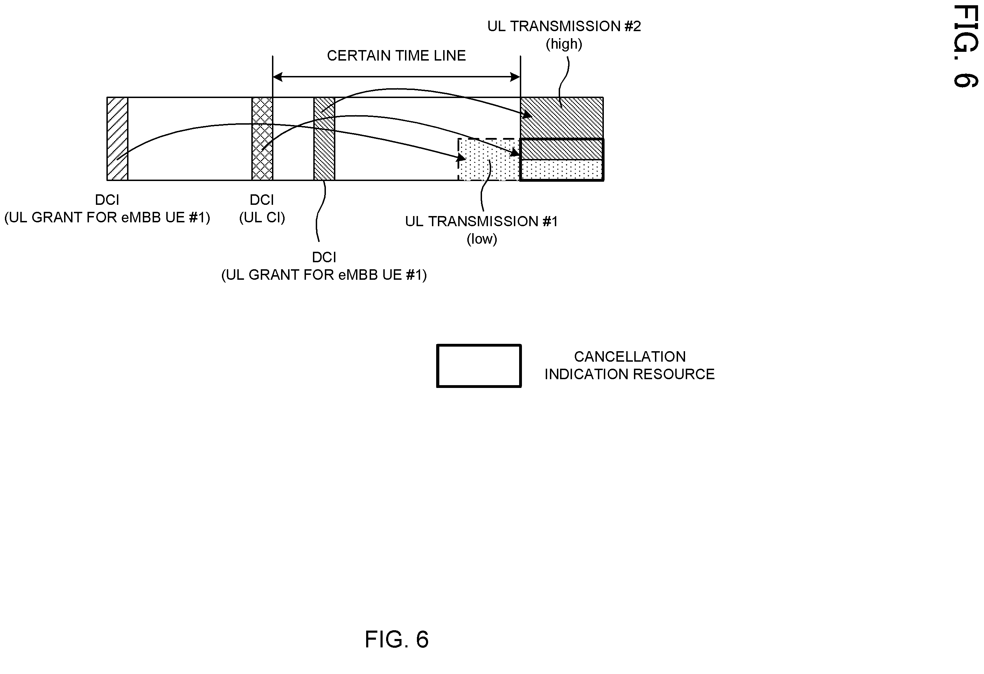

Assume a case where UL transmission #1 having a lower priority (for example, eMBB) overlaps UL transmission #2 having a higher priority (for example, URLLC) in a resource that cancel of a UL transmission is indicated (see FIG. 6).

FIG. 6 shows a case where UE #1 is scheduled with UL transmission #1 (priority low) by the first DCI, UE #2 is scheduled with UL transmission #2 (priority high) by a second DCI different, and the schedules of UL transmission #1 and UL transmission #2 overlap. The base station transmits third DCI (for example, DCI format 2_4) indicating cancel of a UL transmission. Here is shown a case where the second DCI is transmitted (or a schedule of UL transmission #2 is indicated) after the third DCI is transmitted.

In this case, UE #1 cancels UL transmission #1 (low) overlapping the resource that the cancellation indication is made. On the other hand, UE #2 does not cancel but transmit UL transmission #2 (high) overlapping the resource that the cancellation indication is made. This allows a UL transmission having a lower priority to be selectively canceled by indicating cancel by way of the DCI even in a case where UL transmissions of different UEs are scheduled to be overlapped. In other words, scheduling of inter-UE overlapping UL transmissions is enabled by using a cancellation indication.

Here, in the future radio communication systems, sharing a resource between a plurality of MNOs is under study as describe above. In existing systems (for example, in Rel. 17 and previous versions), the DCI for cancellation indication (for example, UL CI) is used without distinguishing the MNO to cancel a certain UL transmission (for example, PUSCH/SRS of priority low).

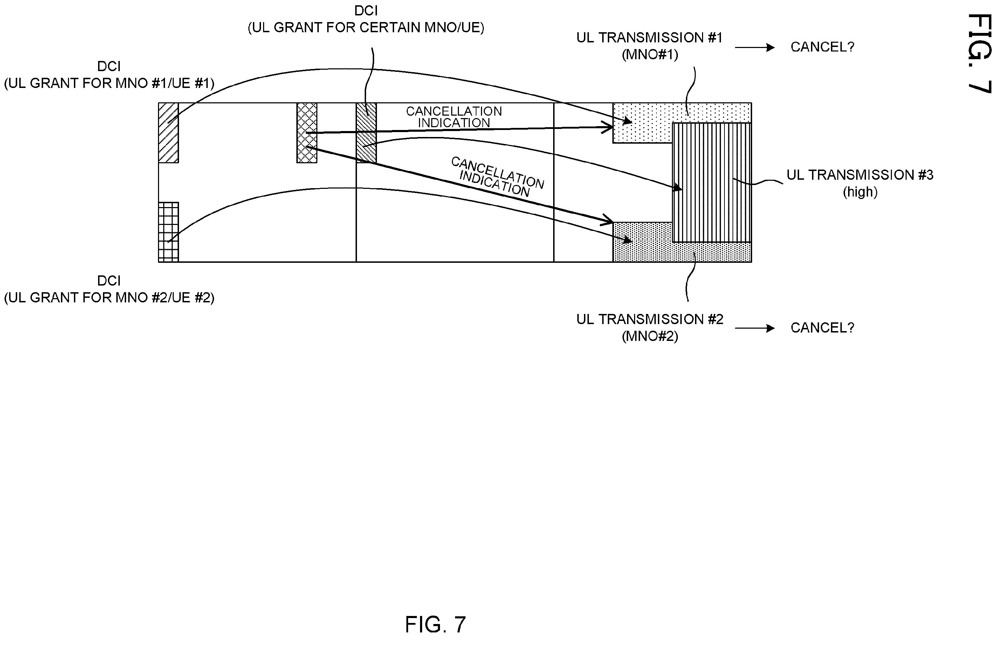

In a case where the resource sharing is performed between a plurality of MNOs, it is also assumed that a cancellation indication of a UL transmission using the DCI or the like is supported (see FIG. 7). In such a case, a problem is to how to control the cancellation indication.

FIG. 7 shows an example of the case where a cancellation indication of a UL transmission is supported when the resource sharing is performed between the plurality of MNOs. Here is shown a case where at least one of UL transmission #1 corresponding to MNO #1 and UL transmission #2 corresponding to MNO #2 is scheduled, and cancel of the UL transmission is indicated with respect to a resource overlapping relevant UL transmission #1/UL transmission #2 (UL transmission #1/UL transmission #2 is to be canceled). In this case, how to control the cancel of the UL transmission has not been sufficiently studied. for example, a problem is how to consider inter-MNO priorities, a priority of UL transmission for each MNO, or the like to control the cancel.

Thus, the inventors of the present invention studied cancellation control on a UL transmission in the case where the resource sharing (or MNO priority resource) is introduced/supported, and came up with the idea of another aspect of the present embodiment.

Embodiments according to the present disclosure will be described in detail with reference to the drawings as follows. The radio communication methods according to respective embodiments may each be employed individually, or may be employed in combination.

In the present disclosure, "A/B" and "at least one of A and B" may be interchangeably interpreted. In the present disclosure, "A/B/C" may refer to "at least one of A, B, and C".

In the present disclosure, activate, deactivate, indicate (or designate), select, configure, update, determine, and the like may be interchangeably interpreted. In the present disclosure, "support, " "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a specific ID, an ID for Public Land Mobile Network (PLMN), a PLMN ID, a PLMN identifier, a PLMN Identity, PLMN identifier information, PLMN Identity information, PLMN ID information, information for identifying a mobile network operator (MNO), an ID for identifying an MNO, information for identifying a business operator, an ID for identifying a business operator, an ID per business operator, a group ID, a PLMN group ID, a sub ID, and the like may be interchangeably interpreted.

In the present disclosure, a PLMN, business operator, an MNO, an operator, an operator policy, a configuration per business operator, a configuration per operator, a service in a business operator, and the like may be interchangeably interpreted.

In the present disclosure, a channel, a signal, a reference signal, and a channel/signal may be interchangeably interpreted. In the present disclosure, a reception of a DL channel/signal, a DL reception, and a DL transmission may be interchangeably interpreted. In the present disclosure, a transmission of a UL channel/signal, a UL transmission, and a UL reception may be interchangeably interpreted.

In the present disclosure, switching, change, switch, overwrite, configuration, indication, update, and activate may be interchangeably interpreted.

### (Radio Communication Method)

The UE may determine at least one piece of configuration information (configuration/notification parameter) of a resource for a DL/UL signal based on information identifying an MNO.

In the present disclosure, the information identifying an MNO may be information for a PLMN (for example, PLMN ID), or an ID (sub ID) indicating/designating an arbitrary group (specific group).

In the present disclosure, the information identifying an MNO may be UE-specific information. One or more pieces of information identifying an MNO may be defined for the UE. The information identifying an MNO may be information fixed to the UE, or information changed/selected in communication.

For example, the configuration information (configuration/notification parameter) of a resource for a DL/UL signal (configuration/notification parameter) may be configuration information (configuration/notification parameter) for a DL/UL bandwidth part (BWP).

A DL/UL BWP which the UE uses (which is available to the UE) may be determined based on the information identifying an MNO. For example, a start/end frequency resource (for example, PRB) of the DL/UL BWP which the UE uses (which is available to the UE) may be expressed by a function of the information identifying an MNO. For example, a BWP ID of the DL/UL BWP which the UE uses (which is available to the UE) may be expressed by a function of the information identifying an MNO.

The UE may determine/decide the information for a DL/UL BWP based on the information identifying an MNO.

The UE may determine a resource for each MNO (for example, a resource for another MNO (a priority resource for another MNO)) based on information reported from the base station (for example, the configuration information).

For example, the UE receives information for a resource associated with another MNO different from the MNO to which the UE itself belongs (or associated with a PLMN ID). In a case where at least one of the first UL transmission and the second UL transmission is supported to be scheduled to overlap a priority resource for another MNO in the time domain, the UE may control whether to transmit/multiplex/drop/cancel the first UL transmission and the second UL transmission based on at least one of inter-MNO priorities, a priority of the first UL transmission, and a priority of the second UL transmission.

In a case where in a priority resource for an MNO, a UL transmission (or a resource for the UL transmission) of another MNO overlaps, the priority resource for the MNO is prioritized and the UL transmission of the other MNO may be dropped/canceled. Alternatively, in a case where a UL transmission (or a UL resource) scheduled for the UE overlaps a priority resource for another MNO, if an indication from the base station (for example, DCI/MAC CE/RRC) is made, the UL transmission may be controlled to be dropped/canceled.

### <First Embodiment>

A first embodiment describes UL transmission control in a case where a UL transmission of an MNO (or a resource used for the UL transmission) overlaps a resource for another MNO (for example, a priority resource for another MNO).

### [Option 1-1]

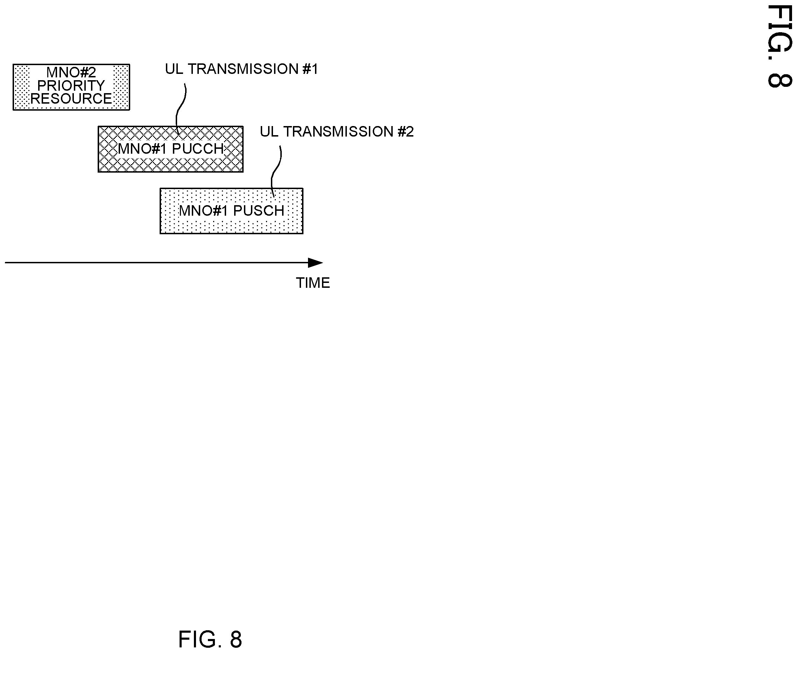

The UE does not need to assume a case where a priority resource for another MNO overlaps UL transmission #1, and UL transmission #2 different from the UL transmission #1 overlaps UL transmission #1(for example, FIG. 8). The base station may control scheduling of a UL transmission to not cause a case where a priority resource for an MNO overlaps UL transmission #1 of a UE of another MNO, and UL transmission #2 different from relevant UL transmission #1 overlaps UL transmission #1.

FIG. 8 shows a case where a priority resource for MNO #2 overlaps first UL transmission #1 for UE #1 of MNO #1 in the time domain, and relevant first UL transmission #1 overlaps second UL transmission #2 for relevant UE #1 in the time domain.

For example, UE #1 does not need to assume that in a case a UL transmission overlapping a priority resource for another MNO (first UL transmission #1 in FIG. 8) is scheduled, second UL transmission #2 overlapping relevant UL transmission #1 is scheduled. Alternatively, UE #1 does not need to assume that in the case where first UL transmission #1 overlaps second UL transmission #2, first UL transmission #1, second UL transmission #2, and a priority resource for another MNO overlap.

Alternatively, while permitting/supporting the case shown in FIG. 8, a transmission of another UE (for example, UE #2 of MNO #2) may be controlled to be not scheduled in the priority resource for MNO #2 overlapping the resource for first UL transmission #1 (time/frequency resource) in the case shown in FIG. 8. In this case, the base station, in a case of allocating a channel/signal of the other MNO to the priority resource for MNO #2, may perform control to not allocate a channel/signal of relevant MNO #2.

### [Option 1-2]

In the case where a priority resource for another MNO overlaps UL transmission #1, and UL transmission #2 different from the UL transmission #1 overlaps UL transmission #1, the UE may control (for example, multiplex/drop) a UL transmission base on a certain rule/certain procedure. For example, the UE may apply at least one of the following options 1-2-1 and 1-2-2.

### <<Option 1-2-1>>

The UE performs a collision processing based on intra-UE multiplex/priority (Intra-UE multiplexing/prioritization) before performing inter-MNO prioritization processing.

In the present disclosure, a rule supported in the existing systems (for example, Rel. 17 and previous versions) (for example, FIG. 3, FIG. 4) may be applied to the collision processing based on the intra-UE multiplex/priority (Intra-UE multiplexing/prioritization). The inter-MNO prioritization processing may prioritize an MNO corresponding to a priority resource and drop a resource/UL transmission of another MNO.

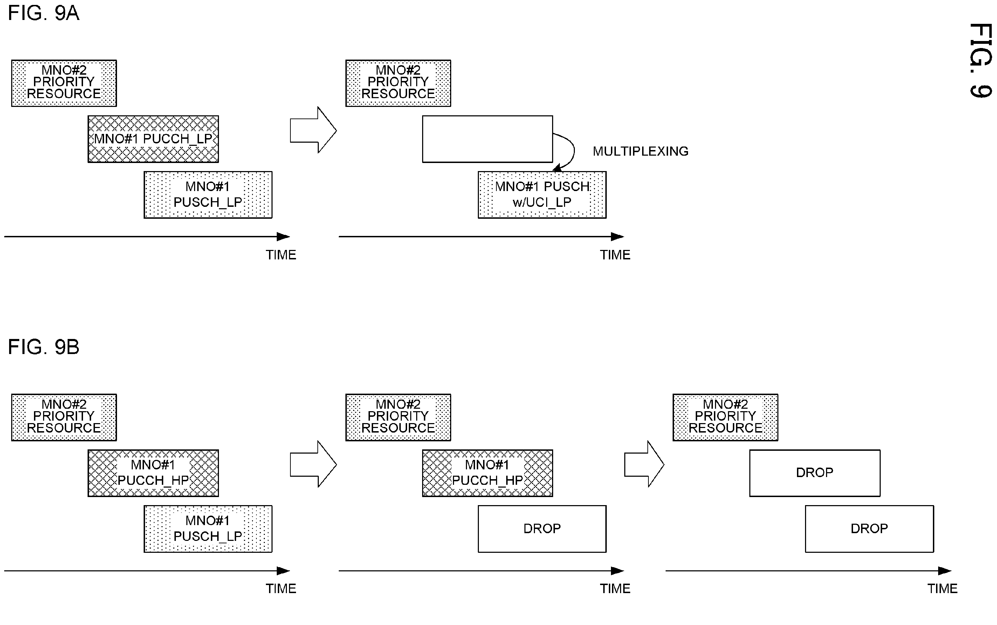

FIG. 9A shows the case where a priority resource for another MNO overlaps UL transmission #1 (low), and UL transmission #2 (low) different from the UL transmission #1 overlaps UL transmission #1. Here, UL transmission #1 corresponds to a PUCCH configured with a lower priority (low), and UL transmission #2 corresponds to a PUSCH configured with a lower priority (low).

In a case where UL transmission #1 and UL transmission #2 are scheduled as shown in FIG. 9A, the UE performs multiplexing/dropping between UL transmission #1/UL transmission #2 firstly based on the priorities of UL transmission #1 and UL transmission #2. The UE thereafter performs the prioritization processing on the UL transmission having undergone the collision processing based on the intra-UE multiplex/priority and a resource for another MNO (if any).

In FIG. 9A, since the priorities of UL transmission #1 and UL transmission #2 are the same (low), UL transmission #1 corresponding to a PUCCH is multiplexed/mapped onto UL transmission #2 corresponding to PUSCH. After that, since remaining UL transmission #2 does not overlap the priority resource for MNO #2, the UE transmits UL transmission #2 (or does not perform the inter-MNO prioritization processing).

FIG. 9B shows the case where a priority resource for another MNO overlaps UL transmission #1 (high), and UL transmission #2 (low) different from the UL transmission #1 overlaps UL transmission #1. Here, UL transmission #1 corresponds to a PUCCH configured with a higher priority (high), and UL transmission #2 corresponds to a PUSCH configured with a lower priority (low).

In FIG. 9B, since the priorities of UL transmission #1 and UL transmission #2 are different from each other, UL transmission #2 having a lower priority (here, PUSCH) is dropped. After that, since remaining UL transmission #2 overlaps the priority resource for MNO #2, the UE drops UL transmission #1 (corresponding to MNO #1).

Note that FIG. 9B shows the case where UL transmission #1 is entirely dropped (or is not transmitted at all) without limitation. The UE may perform control to drop/not transmit a part of UL transmission #1 (or the resource for UL transmission #1), and transmit the residual. A part of dropped UL transmission #1 (or resource for UL transmission #1) may only include at least a part overlapping the priority resource for MNO #2.

### <<Option 1-2-2>>

The UE performs the inter-MNO prioritization processing before performing the collision processing based on the intra-UE multiplex/priority (Intra-UE multiplexing/prioritization).

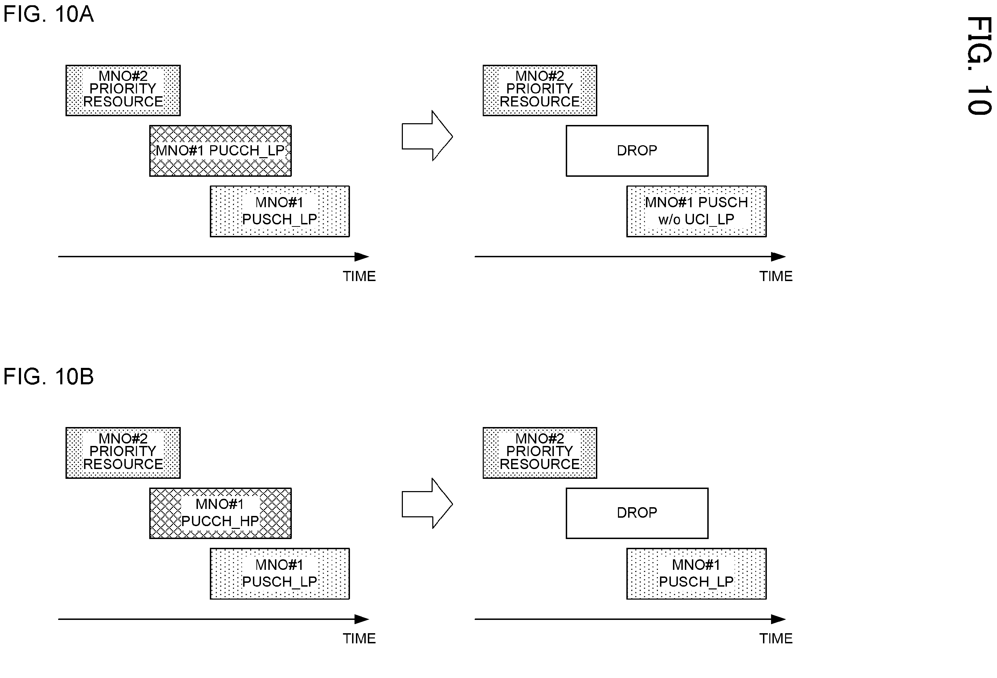

FIG. 10A shows the case where a priority resource for another MNO overlaps UL transmission #1 (low), and UL transmission #2 (low) different from the UL transmission #1 overlaps UL transmission #1. Here, UL transmission #1 corresponds to a PUCCH configured with a lower priority (low), and UL transmission #2 corresponds to a PUSCH configured with a lower priority (low).

In a case where UL transmission #1 and UL transmission #2 are scheduled as shown in FIG. 10A, the UE performs the prioritization processing between different MNO resources firstly. After that, multiplexing/dropping between UL transmission #1/UL transmission #2 (if any) is performed based on the priorities of UL #1 and UL transmission #2.

In FIG. 10A, UL transmission #1 overlapping the priority resource for MNO #2 is dropped. After that, the collision processing based on the intra-UE multiplex/priority is performed, but here, UL transmission #1 is dropped by the inter-MNO prioritization processing and no UL transmission overlaps UL transmission #2, and thus, the UE transmits UL transmission #2.

FIG. 10B shows the case where a priority resource for another MNO overlaps UL transmission #1 (high), and UL transmission #2 (low) different from the UL transmission #1 overlaps UL transmission #1. Here, UL transmission #1 corresponds to a PUCCH configured with a higher priority (high), and UL transmission #2 corresponds to a PUSCH configured with a lower priority (low).

In FIG. 10B, first UL transmission #1 overlapping the priority resource for MNO #2 is dropped. After that, the collision processing based on the intra-UE multiplex/priority is performed, but here, UL transmission #1 is dropped by the inter-MNO prioritization processing and no UL transmission overlaps UL transmission #2, and thus, the UE transmits UL transmission #2.

Note that FIG. 10A and FIG. 10B show the case where UL transmission #1 overlapping the priority resource for MNO #2 is entirely dropped (or is not transmitted at all) without limitation. The UE may perform control to drop/not transmit a part of UL transmission #1 (or the resource for UL transmission #1), and transmit the residual. A part of dropped UL transmission #1 (or resource for UL transmission #1) may only include at least a part overlapping the priority resource for MNO #2.

In a case that a part of UL transmission #1 is dropped, FIG. 10A, after the inter-MNO prioritization processing is performed, the remaining first UL transmission (PUCCH/UCI) may be multiplexed onto UL #2 (PUSCH).

In the first embodiment, which option to select (or whether to apply an option) may be common to or different depending on a UL kind/UL type. The UL kind/UL type may be classified according to, for example, a kind of channel/signal (PUSCH, PUCCH, SRS, PRACH). Alternatively, the UL kind/UL type may be classified according to whether a UL transmission schedule by the DCI or a UL transmission of which transmission is configured/enabled by a higher layer parameter.

Alternatively, whether to apply the collision processing based on the intra-UE multiplex/priority (Intra-UE multiplexing/prioritization) or the inter-MNO prioritization processing may be indicated to the UE by a higher layer parameter/DCI. In this case, which processing is firstly performed may be configured for/indicated to the UE from the base station, or whether to apply the collision processing based on the intra-UE multiplex/priority (Intra-UE multiplexing/prioritization) or whether to apply the inter-MNO prioritization processing may be configured for/indicated to the UE.

### <Second Embodiment>

A second embodiment describes cancellation control on a UL transmission by using cancellation indication information (for example, DCI) or configuration of the cancellation indication information in the MNOs in a case where the resource sharing between the MNOs is supported.

The UE may receive first downlink control information (for example, DCI format 0_0/0_1/0_2) scheduling a UL transmission in a resource of which sharing is supported between a plurality of MNOs and second downlink control information (for example, DCI format 2_4) indicating cancel of a UL transmission.

In this case, the UE may determine whether to cancel the UL transmission based on a certain rule. The certain rule may be at least one of, for example, a priority of the UL transmission, the second downlink control information, and a condition configured by way of DCI/higher layer parameter.

An operation in a case where a cancellation indication (for example, UL CI) is reported may be common to the MNOs (a common rule is applied) (option 2-1), or different between the MNOs (different rules application is supported) (option 2-2).

### [Option 2-1]

Each UE operation with respect to a cancellation indication (for example, each UE operation when a cancellation indication is reported) is the same between the MNOs.

With respect to a cancellation indication, the UE of each MNO performs at least one of the following options 2-1-1 to 2-1-5.

### <<Option 2-1-1>>

The UE does not need to assume that a cancellation indication is reported by way of the DCI (for example, UL CI) (or that a UL CI reception is configured). For example, a UE operation according to a cancellation indication may not be supported in a resource configured in common between the MNOs.

Alternatively, even when receiving the DCI indicating a cancellation indication, the UE may perform control to not comply with the cancellation indication (or ignore the cancellation indication).

### <<Option 2-1-2>>

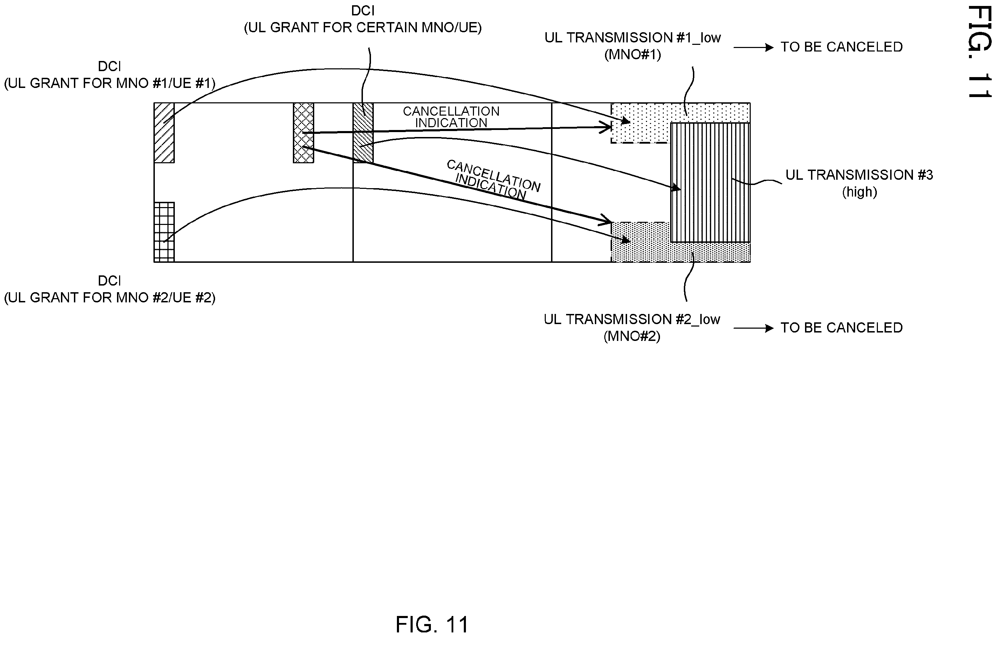

In a case where a UL transmission that is a target of a cancellation indication has a lower priority (low), the UE may perform control to cancel the UL transmission (see FIG. 11).

FIG. 11 shows a case where UL transmission #1 for MNO #1 (or a resource for UL transmission #1) and UL transmission #2 for MNO #2 (or a resource for UL transmission #2) overlap a resource indicated by a cancellation indication. In a case where UL transmission #1 and UL transmission #2 are configured to have lower priorities (low), each UE respectively performs control to not transmit a UL transmission that is a target of the cancellation indication.

By doing so, even in a case of scheduling another UL transmission (for example, with priority high) overlapping the resource for UL transmission #1 and the resource for UL transmission #2, the UL transmissions are canceled by using the cancellation indication common between the MNOs, and the other UL transmission having a higher priority can be appropriately performed.

### <<Option 2-1-3>>

In a case where a UL transmission that is a target of a cancellation indication has a higher priority (high), the UE may perform control to cancel the UL transmission.

### <<Option 2-1-4>>

The UE may perform control to cancel a UL transmission regardless of a priority of the UL transmission that is a target of a cancellation indication. In a case where a cancellation indication is indicated, each UE may perform control to not perform a UL transmission regardless of a priority of the UL transmission that is a target of the cancellation indication (even in a case where the priority is higher).

### <<Option 2-1-5>>

The UE may determine whether to cancel a UL transmission based on an MNO priority of a resource in which the UL transmission that is a target of a cancellation indication is scheduled (or in consideration of the inter-MNO priorities). For example, in a case where a resource in which a UL transmission that is a target of a cancellation indication (for example, a UL transmission corresponding to MNO #1) is scheduled overlaps a priority resource for another MNO (for example, MNO #2), the cancellation indication may be complied with. Option 2-1-5 may be applied in combination with other options (for example, options 2-1-2 to 2-1-4).

### <<Variation>>

Note that in options 2-1-1 to 2-1-5 described above, a UL transmission itself that is a target of a cancellation indication is not transmitted (or a UL transmission is not transmitted at all) without limitation. In a case where a resource indicated by a cancellation indication overlaps a part of a UL transmission (or a resource for UL transmission), the UL transmission may be performed by using a resource not overlapping the resource indicated by the cancellation indication. In this case, when the certain number of resources not overlapping the resource indicated by the cancellation indication (remaining resources for UL transmission) (for example, X symbols) remain, the UL transmission may be permitted.

### [Option 2-2]

Each UE operation when a cancellation indication is reported may be different for each MNO. An operation of each MNO (or the UE corresponding to each MNO) in a case where a cancellation indication is reported may be respectively controlled by the configuration/indication from the base station. The configuration/indication from the base station to each UE may be made by using at least one or a higher layer parameter, MAC CE, and DCI.

In the case where a cancellation indication is indicated, the UE of each MNO performs at least one of the following options 2-2-1 to 2-2-4. The base station may configure/indicate which option to apply for/to each MNO (or the UE corresponding to each MNO) by using at least one of a higher layer parameter, MAC CE, and DCI. That is, options different between the MNOs are supported to be applied.

### <<Option 2-2-1>>

In a case where a configuration/indication is made by using a higher layer parameter/MAC CE/DCI, the UE does not need to assume that a cancellation indication is reported by way of the DCI (for example, UL CI) (or that a UL CI reception is configured). For example, a UE operation according to a cancellation indication may not be supported in a resource configured in common between the MNOs.

Alternatively, even when receiving the DCI indicating a cancellation indication, the UE may perform control to not comply with the cancellation indication (or ignore the cancellation indication).

### <<Option 2-2-2>>

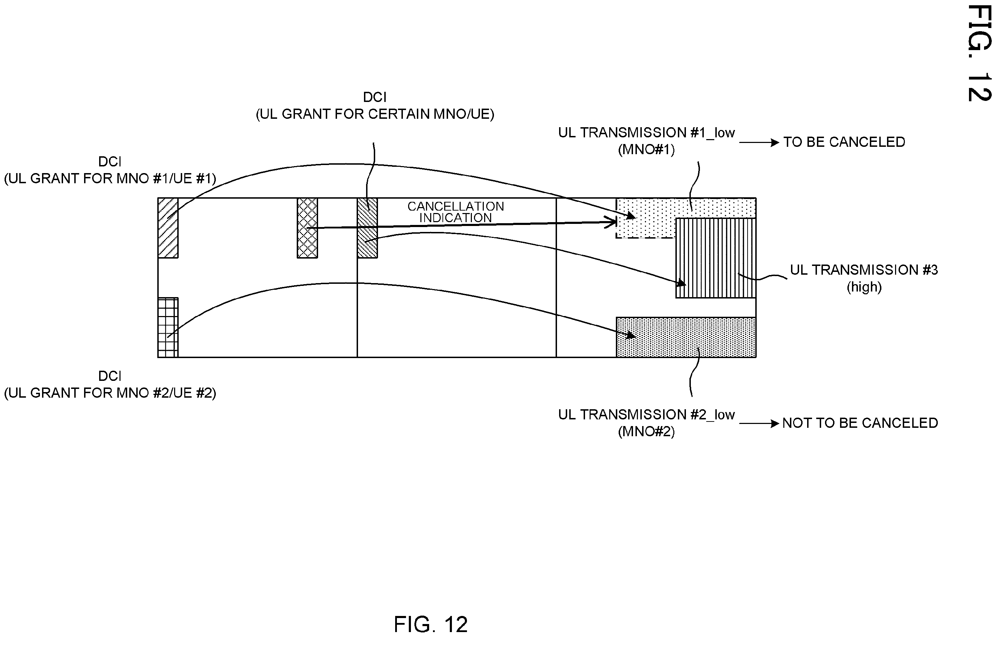

In the case where a configuration/indication is made by using a higher layer parameter/MAC CE/DCI, when a UL transmission that is a target of a cancellation indication has a lower priority (low), the UE may perform control to cancel the UL transmission (see FIG. 12).

FIG. 12 shows a case where option 2-2-2 is applied to UL transmission #1 for MNO #1 (or a resource for UL transmission #1). In a case where UL transmission #1 (or a resource for UL transmission #1) overlaps a resource indicated by a cancellation indication, and UL transmission #1 is configured to have a lower priority (low), the UE of MNO #1 performs control to not transmit UL transmission # 1 that is a target of the cancellation indication.

### <<Option 2-2-3>>

In the case where a configuration/indication is made by using a higher layer parameter/MAC CE/DCI, when a UL transmission that is a target of a cancellation indication has a higher priority (high), the UE may perform control to cancel the UL transmission.

### <<Option 2-2-4>>

In the case where a configuration/indication is made by using a higher layer parameter/MAC CE/DCI, the UE may perform control to cancel a UL transmission regardless of a priority of the UL transmission that is a target of a cancellation indication. In a case where a cancellation indication is indicated, each UE may perform control to not perform a UL transmission regardless of a priority of the UL transmission that is a target of the cancellation indication (even in a case where the priority is higher).

In this way, options different between the MNOs (between the UEs of the different MNOs) are supported to be applied.

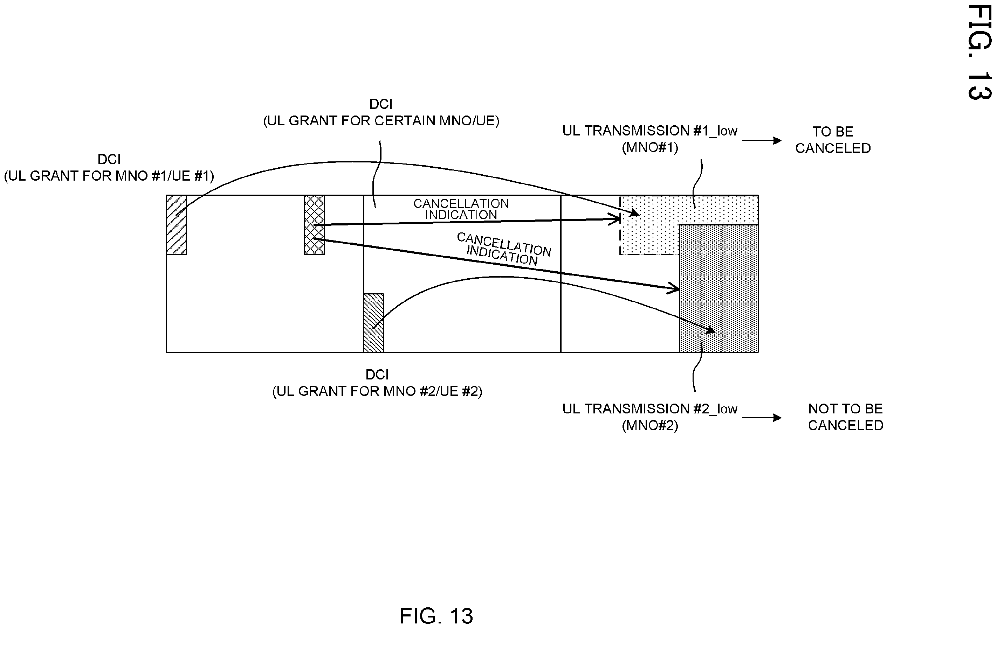

FIG. 13 shows a case where option 2-2-2 (cancellation in the case of low) is configured/indicated for/to the UE of MNO #1, and option 2-2-1 (no cancellation indication/not complying with cancellation indication) is configured/indicated for/to the UE of MNO #2. In this case, even in a case where UL transmission #1 (low) of MNO #1 and UL transmission #2 (low) of MNO #2 are targets of a cancellation indication (for example, a resource indicated by the cancellation indication, UL transmission #1, and UL transmission 2# overlap), only UL transmission #1 is canceled.

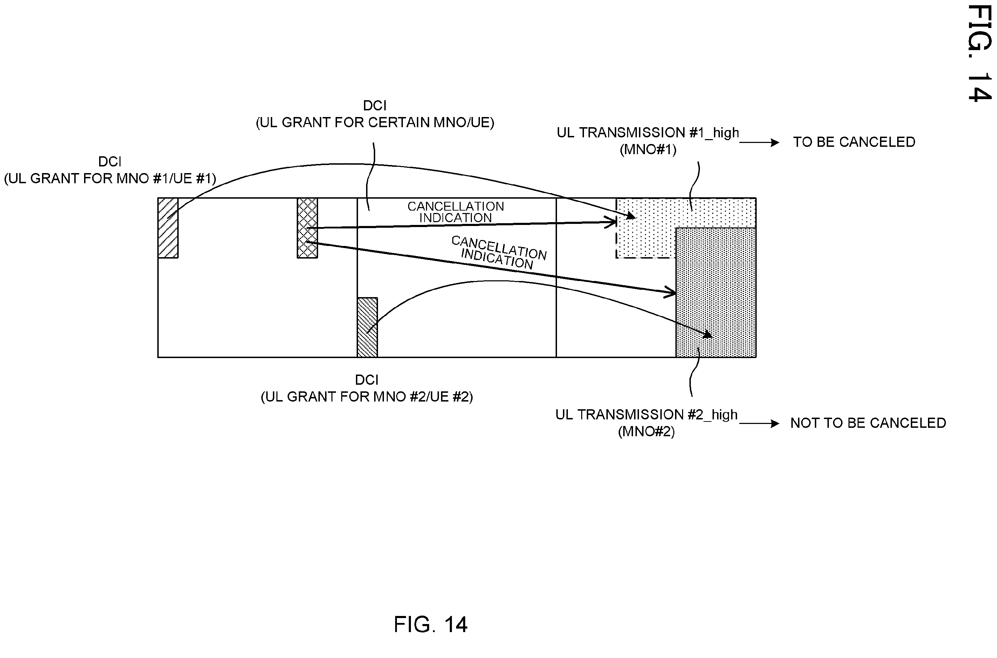

FIG. 14 shows a case where option 2-2-4 (cancellation regardless of the priority) is configured/indicated for/to the UE of MNO #1, and option 2-2-2 (cancellation in the case of low) is configured/indicated for/to the UE of MNO #2. In this case, even in a case where UL transmission #1 (high) of MNO #1 and UL transmission #2 (high) of MNO #2 are targets of a cancellation indication (for example, a resource indicated by the cancellation indication, UL transmission #1, and UL transmission 2# overlap), only UL transmission #1 is canceled.

In this way, options different between the MNOs being supported to be applied enables a specific UL transmission to be selectively canceled by using the DCI for one cancellation indication (or common cancellation indication) even in the case where UL transmissions having the same priority overlap between the MNOs.

Options different between the MNOs being supported to be applied also enables control to cancel a UL transmission having a higher priority and not cancel a UL transmission having a lower priority even in the case where UL transmissions having different priorities overlap between the MNOs. This allows such an indication to be flexibly indicated that prioritizes in a priority resource for an MNO a UL transmission (for example, low) of the MNO and selectively cancels a UL transmission (for example, high) of another MNO.

### <<Variation>>

Note that in options 2-2-1 to 2-2-4 described above, a UL transmission itself that is a target of a cancellation indication is not transmitted (or a UL transmission is not transmitted at all) without limitation. In a case where a resource indicated by a cancellation indication overlaps a part of a UL transmission (or a resource for UL transmission), the UL transmission may be performed by using a resource not overlapping the resource indicated by the cancellation indication. In this case, when the certain number of resources not overlapping the resource indicated by the cancellation indication (remaining resources for UL transmission) (for example, X symbols) remain, the UL transmission may be permitted.

Note that which option to select (or whether to apply an option) may be common to or different depending on the UL kind/UL type. The UL kind/UL type may be classified according to, for example, a kind of channel/signal (PUSCH, PUCCH, SRS, PRACH). Alternatively, the UL kind/UL type may be classified according to whether a UL transmission schedule by the DCI or a UL transmission of which transmission is configured/enabled by a higher layer parameter.

In the present disclosure, a frequency at which the resource sharing is performed (a shared frequency) may be used only for a specific communication direction/link.

The specific communication direction/link may be, for example, at least one of DL, UL, and supplemental UL.

In the present disclosure, the shared frequency may be used only for a specific channel/signal.

In the present disclosure, the shared frequency may be used in a specific scenario.

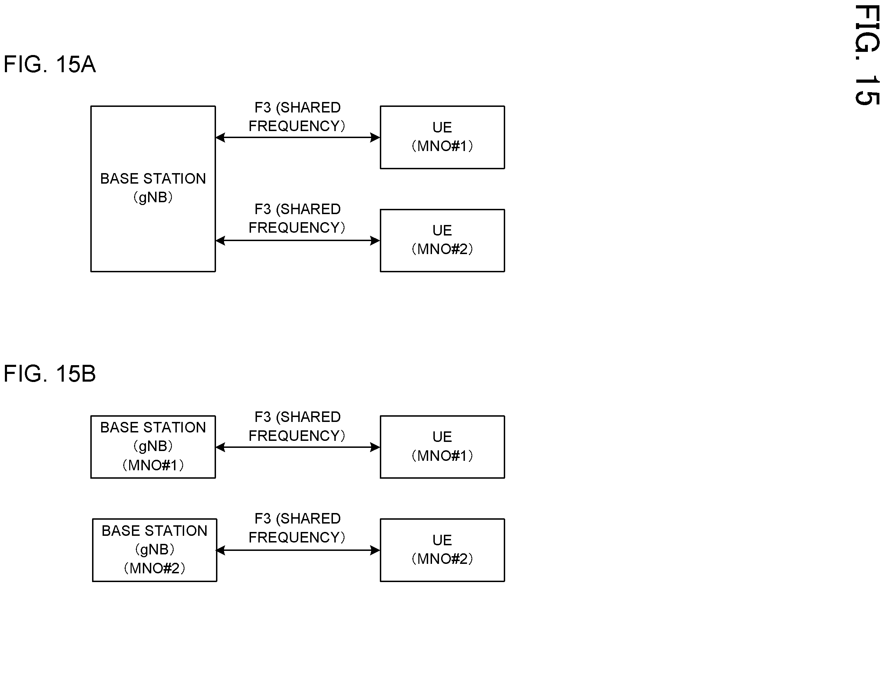

The specific scenario may be, for example, a scenario in which the base station is shared to communicate with the UE corresponding to each MNO (see FIG. 15A).

The specific scenario may be, for example, a scenario in which the base station is not shared to communicate with the UE corresponding to each MNO (see FIG. 15B).

### (Supplementary Note)

The following inventions are supplemented for one embodiment of the present disclosure.

### [Supplementary Note 1-1]

A terminal including a receiving section that receives information for a resource associated with a certain Public Land Mobile Network (PLMN) ID, and a control section that controls at least one of a first UL transmission and a second UL transmission based on at least one of inter-PLMN priorities, a priority of the first UL transmission, and a priority of the second UL transmission, in a case where at least one of the first UL transmission and the second UL transmission corresponding to a PLMN ID different from the certain PLMN ID is supported to be scheduled to overlap the resource in a time domain.

### [Supplementary Note 1-2]

The terminal according to supplementary note **1-1,** wherein in a case where the resource overlaps the first UL transmission in the time domain, the control section does not assume that the first UL transmission overlaps the second UL transmission in the time domain.

### [Supplementary Note 1-3]

The terminal according to supplementary note 1-1 or **1-2,** wherein in a case where the resource overlaps the first UL transmission in the time domain, and the first UL transmission overlaps the second UL transmission in the time domain, the control section performs drop processing based on multiplex or priority between the first UL transmission and the second UL transmission before performing inter-PLMN priority processing.

### [Supplementary Note 1-4]

The terminal according to any one of supplementary notes 1-1 to **1-3,** wherein in a case where the resource overlaps the first UL transmission in the time domain, and the first UL transmission overlaps the second UL transmission in the time domain, the control section performs inter-PLMN priority processing before performing drop processing based on multiplex or priority between the first UL transmission and the second UL transmission.

### [Supplementary Note 2-1]

A terminal including a receiving section that receives first downlink control information scheduling a first UL transmission in a resource and second downlink control information indicating cancel of a UL transmission, the resource being supported to be shared between a plurality of Public Land Mobile Networks (PLMNs), and a control section that determines whether to cancel the first UL transmission based on at least one of a priority of the first UL transmission scheduled by the first downlink control information and the second downlink control information.

### [Supplementary Note 2-2]

The terminal according to supplementary note 2-1, wherein a canceling operation on a UL transmission based on the second downlink control information is configured in common between the plurality of PLMNs.

### [Supplementary Note 2-3]

The terminal according to supplementary note 2-1 or 2-2, wherein a canceling operation on a UL transmission based on the second downlink control information is configured differently between the plurality of PLMNs.

### [Supplementary Note 2-4]

The terminal according to any one of supplementary notes 2-1 to 2-3, wherein the receiving section receives information related to a canceling operation corresponding to each PLMN.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

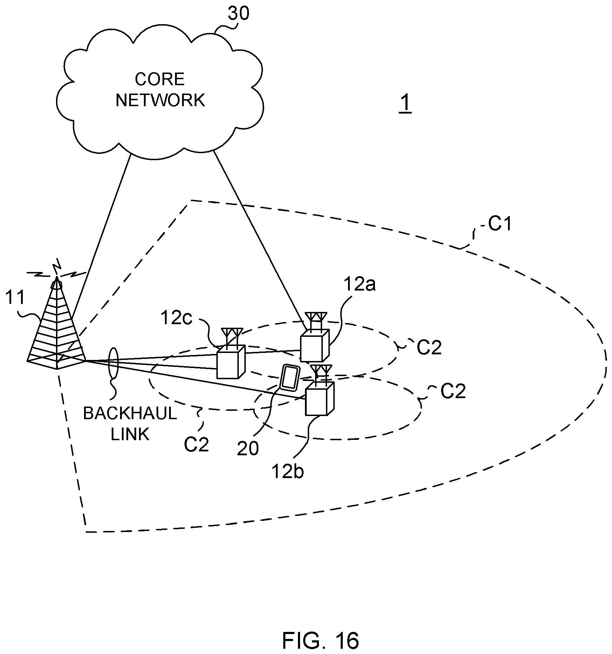

FIG. 16 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

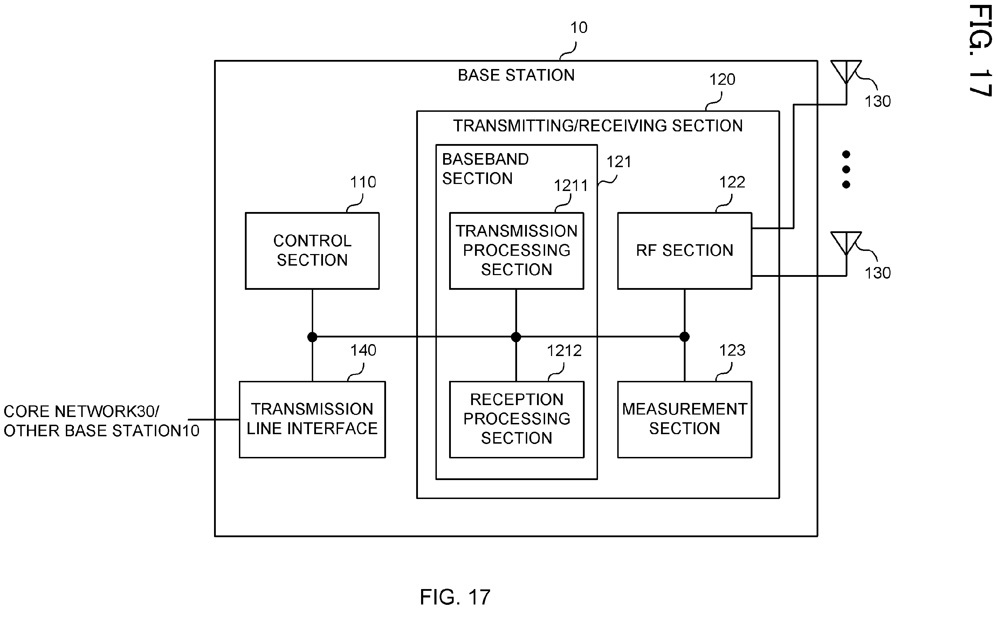

FIG. 17 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

The transmitting/receiving section 120 may transmit information for a resource associated with a certain Public Land Mobile Network (PLMN) ID. The control section 110 may determine whether to receive at least one of a first UL transmission and a second UL transmission based on at least one of inter-PLMN priorities, a priority of the first UL transmission, and a priority of the second UL transmission, in a case where at least one of the first UL transmission and the second UL transmission corresponding to a PLMN ID different from the certain PLMN ID is supported to be scheduled to overlap the resource in a time domain.

The transmitting/receiving section 120 may transmit first downlink control information scheduling a first UL transmission in a resource and second downlink control information indicating cancel of a UL transmission, the resource being supported to be shared between a plurality of Public Land Mobile Networks (PLMNs). The control section 110 may control an indication of cancel of the first UL transmission based on at least one of a priority of the first UL transmission scheduled by the first downlink control information and the second downlink control information.

### (User Terminal)

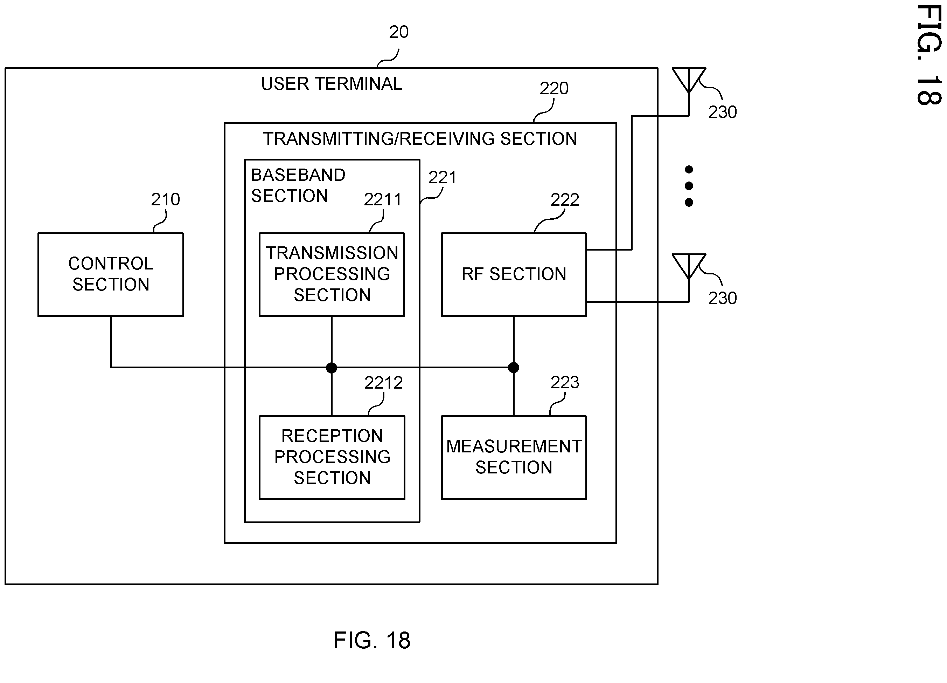

FIG. 18 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information for a resource associated with a certain Public Land Mobile Network (PLMN) ID. The control section 210 may control at least one of a first UL transmission and a second UL transmission based on at least one of inter-PLMN priorities, a priority of the first UL transmission, and a priority of the second UL transmission, in a case where at least one of the first UL transmission and the second UL transmission corresponding to a PLMN ID different from the certain PLMN ID is supported to be scheduled to overlap the resource in a time domain.

In a case where the resource overlaps the first UL transmission in the time domain, the control section 210 does not assume that the first UL transmission overlaps the second UL transmission in the time domain. In a case where the resource overlaps the first UL transmission in the time domain, and the first UL transmission overlaps the second UL transmission in the time domain, the control section 210 may perform drop processing based on multiplex or priority between the first UL transmission and the second UL transmission before performing inter-PLMN priority processing. In the case where the resource overlaps the first UL transmission in the time domain, and the first UL transmission overlaps the second UL transmission in the time domain, the control section 210 may perform inter-PLMN priority processing before performing drop processing based on multiplex or priority between the first UL transmission and the second UL transmission.

The transmitting/receiving section 220 may receive first downlink control information scheduling a first UL transmission in a resource and second downlink control information indicating cancel of a UL transmission, the resource being supported to be shared between a plurality of Public Land Mobile Networks (PLMNs). The transmitting/receiving section 220 may receive information related to a canceling operation corresponding to each PLMN. The control section 210 may determine whether to cancel the first UL transmission based on at least one of a priority of the first UL transmission scheduled by the first downlink control information and the second downlink control information.

A canceling operation on a UL transmission based on the second downlink control information may be configured in common between the plurality of PLMNs. A canceling operation on a UL transmission based on the second downlink control information may be configured differently between the plurality of PLMNs.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

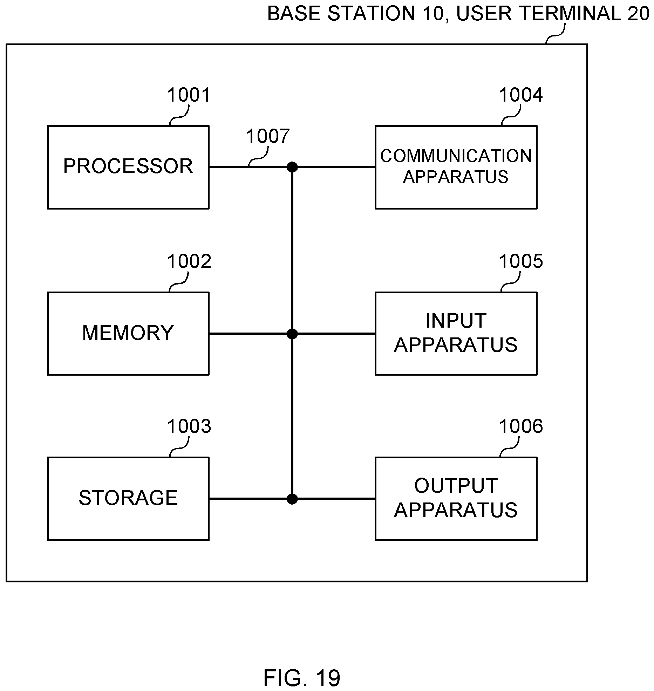

For example, a base station, a user terminal, and so on according to one embodiment of the present disclosure may function as a computer that executes the processes of the radio communication method of the present disclosure. FIG. 19 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may have a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a certain signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of certain information (for example, reporting of "X holds") does not necessarily have to be reported explicitly, and can be reported implicitly (by, for example, not reporting this certain information or reporting another piece of information).

Determinations may be made in values represented by one bit (0 or 1), may be made in Boolean values that represent true or false, or may be made by comparing numerical values (for example, comparison against a certain value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, a base station transmitting information to a terminal may be interchangeably interpreted as the base station indicate control/operation base on the information to the terminal.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

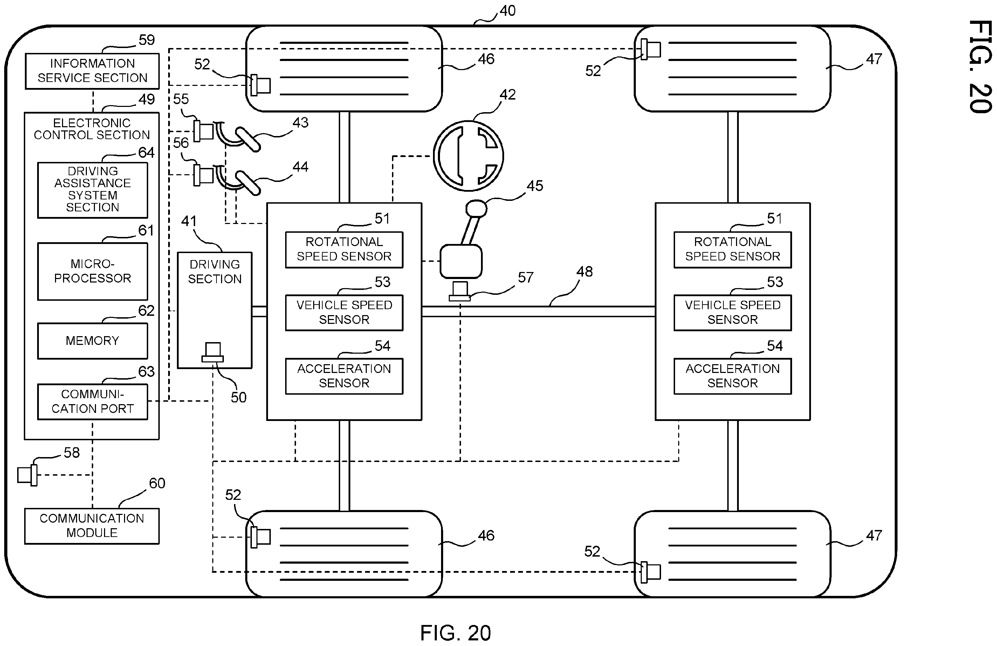

FIG. 20 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the driving section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG, where x is, for example, an integer or a decimal), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B are each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or less than," "less than," "more than," "equal to," and the like may be interchangeably interpreted. In the present disclosure, the words meaning "good," "bad," "large", "small," "high," "low," "early," "late," "wide," "narrow," and the like may be interchangeably interpreted (without distinction of positive, comparative, superlative). In the present disclosure, the words meaning "good," "bad," "large," "small," "high," "low," "early," "late," "wide," "narrow," and the like may be interchangeably interpreted as expressions of those with "ith" (i represents any integer) prefixed (without distinction of positive, comparative, superlative) (for example, "highest" may be interchangeably interpreted as "ith highest").

In the present disclosure, "of," "for," "regarding," "related to," "associated with," and the like may be interchangeably interpreted.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives first downlink control information scheduling a first UL transmission in a resource and second downlink control information indicating cancel of a UL transmission, the resource being supported to be shared between a plurality of Public Land Mobile Networks (PLMNs); and
a control section that determines whether to cancel the first UL transmission based on at least one of a priority of the first UL transmission scheduled by the first downlink control information and the second downlink control information.

2. The terminal according to claim 1, wherein
a canceling operation on a UL transmission based on the second downlink control information is configured in common between the plurality of PLMNs.

3. The terminal according to claim 1, wherein
a canceling operation on a UL transmission based on the second downlink control information is configured differently between the plurality of PLMNs.

4. The terminal according to claim 1, wherein
the receiving section receives information related to a canceling operation corresponding to each PLMN.

5. A radio communication method for a terminal, the radio communication method comprising:
receiving first downlink control information scheduling a first UL transmission in a resource and second downlink control information indicating cancel of a UL transmission, the resource being supported to be shared between a plurality of Public Land Mobile Networks (PLMNs); and
determining whether to cancel the first UL transmission based on at least one of a priority of the first UL transmission scheduled by the first downlink control information and the second downlink control information.

6. A base station comprising:
a transmitting section that transmits first downlink control information scheduling a first UL transmission in a resource and second downlink control information indicating cancel of a UL transmission, the resource being supported to be shared between a plurality of Public Land Mobile Networks (PLMNs); and
a control section that indicates cancel of the first UL transmission based on at least one of a priority of the first UL transmission scheduled by the first downlink control information and the second downlink control information.
